# DEMANDE DE BREVET EUROPEEN

(11) **EP 0 865 863 A1**
(43) Date de publication de la demande: **23.09.1998**
(21) Numéro de dépôt: 97400618.1
(22) Date de dépôt: 19.03.1997
(51) Int. Cl.: B23K 26/06

(54) **Tête-Optique-Bifocalisation**

(71) Demandeur: Alphatech-Industrie, 91962 Les Ulis Cédex B (FR)
(72) Inventeur: Michelet, Guy Alain Antoine, 75014 Paris (FR)

(57) **Abrégé**

L'invention a pour objet FIGURES 6 et 7, un dispositif optique parabolique coupé en deux permettant de faire par laser du soudage, du découpage, du perçage, du traitement thermique, du dépôt métallique, caractérisé en ce qu'il donne deux points de focalisation avec la possibilité de répartir en relatif, la puissance lumineuse entre les deux points :
- (1) (2) miroir de profil parabolique en deux parties.
- (9) faisceau laser.
- (11) et (12) deux points de focalisation.

## Description

La présente invention concerne un dispositif optique de focalisation bifocale permettant selon le mode d'application retenu de réaliser par laser :
* des soudures bord à bord de deux pièces, par exemple le raboutage de deux tôles,
* de souder plus profondément à puissance donnée,
* de découper des épaisseurs plus grandes à puissance donnée,
par le couplage ou le découplage plus ou moins prononcé de deux points de focalisation judicieusement positionnés sur les pièces mises en oeuvre.

Dans l'industrie différents dispositifs existent pour souder ou découper, mais ils sont élaborés sur des concepts traditionnels tels, qu'il n'offrent qu'un seul point focal, ce qui impose, par exemple dans le cas du raboutage bord à bord de deux tôles par soudage, d'avoir des pièces parfaites et d'un accostage sans défaut.

Les réalités industrielles, conduisent à rechercher les possibilités permettant de relâcher au maximum les tolérances de fabrication. L'utilisation de cette tête de focalisation selon l'une quelconque de ses variantes exposées ci-après, offre cette possibilité.

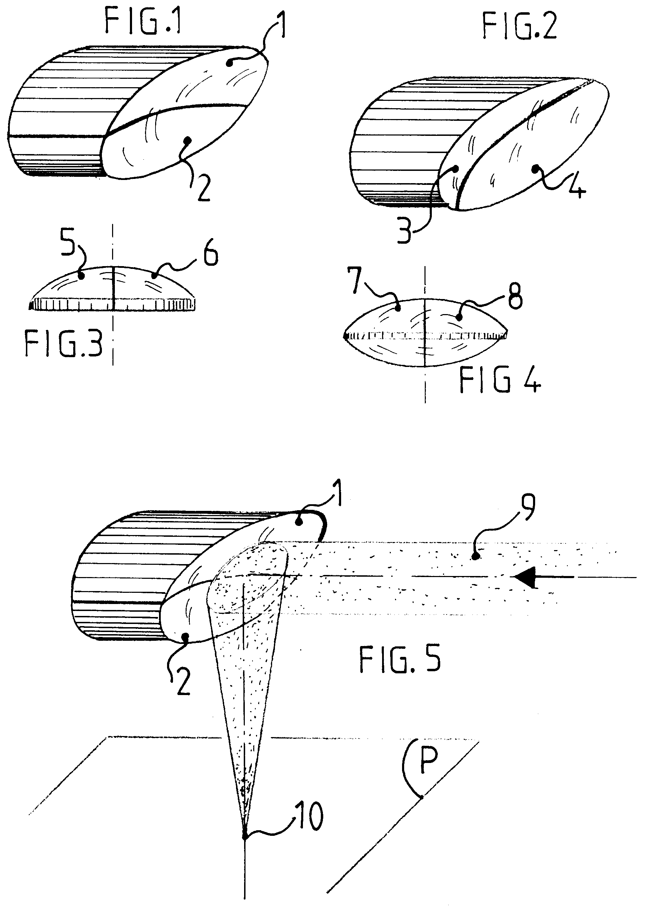

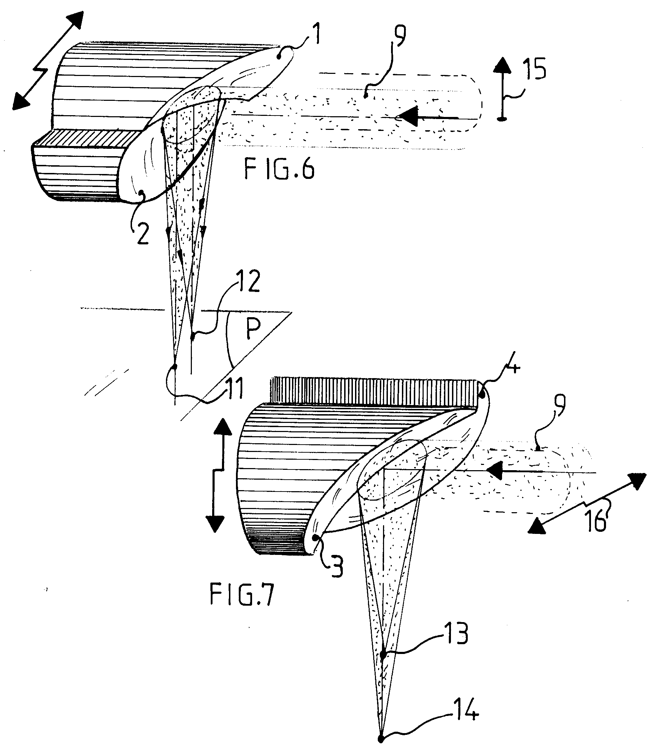

L'invention a pour objet, **FIGURES 1,2,3 et 4**, un dispositif optomécanique qui est élaboré à partir :
- d'un miroir creux de focalisation ayant, à titre d'exemple, un profil parabolique et selon l'invention, réalisé en deux parties (1) et (2), (3) et (4) **FIGURES 1 et 2**,
- ou d'une lentille convergente, lentille réalisée selon l'invention en deux parties (5) et (6), (7) et (8) **FIGURES 3 et 4**.

Le principe repose sur le fait, qu'un faisceau de lumière qui arrive parallèlement à l'axe du dispositif optique est focalisé en un point sur cet axe et si les dispositifs optiques **FIGURES 1,2,3, et 4** sont élaborés selon l'invention en deux parties, chaque partie, dans son plan de coupe, comporte un demi axe optique.

Quand les deux parties ne sont pas décalées l'une par rapport à l'autre, le dispositif se rapportant à l'invention présente un seul axe optique, comme le montre à titre d'exemple la **FIGURE 5**.

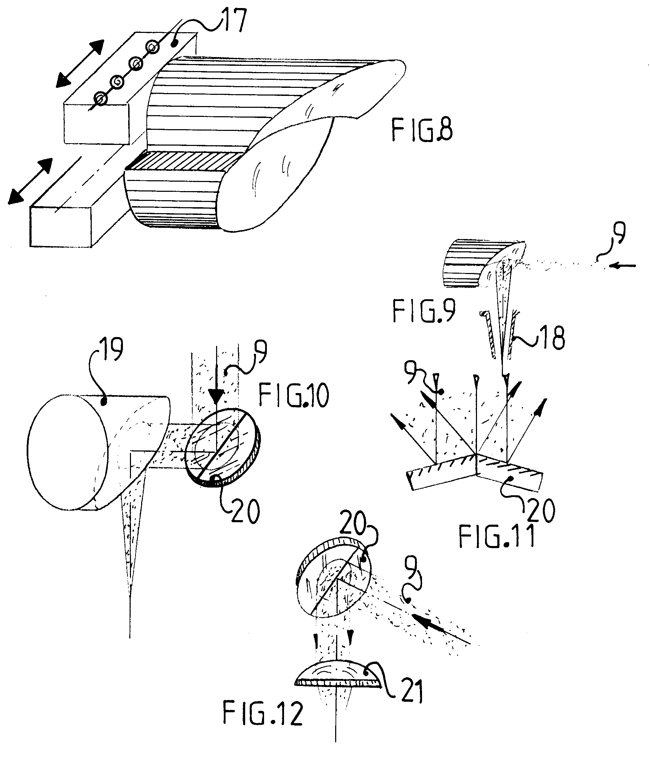

Quand les deux parties sont décalées l'une par rapport à l'autre, le dispositif selon l'invention présente deux axes optiques distincts, comme le montrent à titre d'exemple les **FIGURES 6 et 7**.

A titre d'exemple d'un dispositif selon l'invention, considérons un miroir parabolique **FIGURE 5** comme le miroir de la **FIGURE 1** avec un faisceau laser incident (9), les deux parties (1) et (2) n'étant pas décalées l'une par rapport à l'autre, le faisceau (9) incident est focalisé en un seul point (10) dans le plan (P).

En décalant la partie (1) par rapport à la (2), le faisceau laser est focalisé simultanément en deux points (11) et (12). Figure 6

Le dispositif selon l'invention permet également, en laissant fixe dans le plan (P) la position des deux points de focalisation (11) et (12) **FIGURE 6**, de faire une répartition relative de la puissance lumineuse entre un point de focalisation et l'autre, en déplaçant le faisceau laser perpendiculairement au plan de séparation des deux parties (1) et (2) **FIGURE 5**, suivant la direction (15).

A titre d'exemple si le faisceau laser incident au miroir a une puissance de 1000 W, en faisant monter le faisceau laser vers la position (15) et parallèlement à lui même, on peut par exemple diminuer la puissance du point (11) à 300 W et d'avoir celle du point (12) à 700 W. En général cette configuration sera utilisée en soudage de pièces à rabouter d'épaisseur ou/et de caractéristiques métallurgiques différentes.

Un autre intérêt du dispositif, suivant l'invention, est de pouvoir augmenter la profondeur de champ de focalisation à ouverture numérique quasi-constante pour augmenter par exemple la profondeur de soudage, de découpe ou de perçage .

A titre d'exemple, considérons un miroir de focalisation **FIGURE 7**, comparable à celui de la **FIGURE 2** qui, par rapport au précédent exemple, a un plan de séparation des deux parties qui est tourné de 90 °, c'est-à-dire qu'il est contenu dans le plan d'incidence. Dans cette configuration, le dispositif suivant l'invention à ses deux parties (3) et (4) dont l'axe optique de l'une est superposé sur celui de l'autre. Quand la partie (3) se décale de la partie (4), les deux axes optiques glissent l'un sur l'autre et le point de focalisation unique fait place à deux points de focalisation séparés, l'un (14) en dessous de l'autre (13).

En déplaçant le faisceau laser (9) parallèlement à lui-même **FIGURE 7** suivant la direction (16), on peut intervenir sur la répartition relative de la puissance lumineuse dans les points de focalisation tout en les laissant fixes dans la même position de l'espace.

L'invention a donc pour objet un dispositif caractérisé :
- en ce qu'il est prévu pour les applications de soudage, de découpe, de perçage par laser et éventuellement pour le traitement thermique et les dépôts métalliques par laser.
- en ce qu'il est constitué de deux demi-miroirs de focalisation pouvant être calés en usine pour donner deux points de focalisation à des positions définies comme le montrent à titre d'exemple les **FIGURES 6 et 7**.
- en ce que le dispositif peut être réalisé par une lentille faite de deux parties **FIGURES 3 et 4**.
- en ce que, à chaque partie du dispositif optique est associé une mécanique de déplacement (17) manuel par vis micrométrique ou motorisé, que ce soit pour le cas des miroirs comme pour celui des lentilles.
- en ce qu'à chaque type de dispositif peut être associé une buse (18) pour confiner un gaz d'assistance d'interaction laser **FIGURE 9**.
- en ce qu'avec une autre variante **FIGURE 10** on peut obtenir un double point de focalisation, en associant à un miroir ou à une lentille faits d'une seule partie, un miroir plan coupé en deux. En effet, comme le montre la **FIGURE 10**, le faisceau laser (9) qui arrive sur le miroir plan (20) fait de deux parties le réfléchit vers le miroir de focalisation (19).

Si le miroir coupé (20) a ses deux demie-surfaces réfléchissantes situées dans le même plan, le miroir de focalisation (19) donnera un seul point focal.

Si le miroir coupé (20) a ses deux demi-surfaces réfléchissantes qui ne sont pas contenues dans un même plan et forment un dièdre dont l'arête est contenue dans leur plan de séparation des deux parties **FIGURE 11**, le miroir de focalisation (19) donnera du faisceau laser deux points focaux.

La **FIGURE 12** montre à titre d'exemple le dispositif dont le miroir de focalisation a été remplacé par une lentille (21).

Cette dernière variante de l'invention **FIGURES 10, 11 et 12** ne sera appliquée que dans un nombre de cas limités car elle induit quelques aberrations optiques.

## Revendications

1. Dispositif optomécanique pour le soudage par laser qui donne deux points de focalisation permettant de réaliser deux cordons de soudure très proches ou d'obtenir un cordon de soudure plus large, caractérisé en ce qu'il comprend un miroir de profil parabolique coupé en deux parties (1) et (2) dont la translation relative de deux parties entre-elles permet d'obtenir les deux points.

2. Dispositif optomécanique pour le soudage par laser qui donne deux points de focalisation permettant de réaliser deux cordons de soudure très proches ou d'obtenir un cordon de soudure plus large, caractérisé en ce qu'il comprend une lentille coupée en deux parties (5) et (6) ou (7) et (8), dont la translation relative de deux parties entre-elles permet d'obtenir les deux points.

3. Dispositif optomécanique pour le soudage par laser qui donne deux points de focalisation permettant de réaliser un cordon de soudure plus profond, caractérisé en ce qu'il comprend un miroir de profil parabolique coupé en deux parties (3) et (4), dont la translation relative de deux parties entre-elles permet d'obtenir les deux points.

4. Dispositif optomécanique pour le soudage par laser qui donne deux points de focalisation permettant de réaliser un cordon de soudure plus profond, caractérisé en ce qu'il comprend une lentille coupée en deux parties (5) et (6) ou (7) et (8), dont la translation relative de deux parties entre-elles permet d'obtenir les deux points .

5. Dispositif optomécanique pour la découpe par laser qui donne deux points de focalisation permettant de réaliser deux découpes paralléles très proches, caractérisé en ce qu'il comprend une lentille coupée en deux parties (5) et (6) ou (7) et (8), dont la translation relative de deux parties entre-elles permet d'obtenir les deux points .

6. Dispositif optomécanique pour la découpe par laser qui donne deux points de focalisation permettant de réaliser une découpe plus profonde, caractérisé en ce qu'il comprend une lentille coupée en deux parties (5) et (6) ou (7) et (8), dont la translation relative de deux parties entre-elles permet d'obtenir les deux points.

7. Dispositif optomécanique pour le traitement thermique par laser permettant d'élargir de façon quasi homogène la zone lumineuse d'interaction, qui donne deux points de focalisation, caractérisé en ce qu'il comprend un miroir de profil parabolique coupé en deux parties (1) et (2), dont la translation relative de deux parties entre-elles permet d'obtenir les deux points.

8. Dispositif optomécanique pour les dépôts métalliques par laser qui donne deux points de focalisation, caractérisé en ce qu'il comprend un miroir de profil parabolique coupé en deux parties (1) et (2), dont la translation relative de deux parties entre-elles permet d'obtenir les deux points.

9. Dispositif suivant l'une quelconque des revendications 1 à 8, caractérisé en ce qu'il comprend un dispositif mécanique de déplacement (17) permettant de régler l'écartement entre les deux points de focalisation.

10. Dispositif suivant l'une quelconque des revendications 1 à 9, caractérisé en ce qu'il comprend une buse de confinement de gaz (18).
